# EUROPÄISCHE PATENTSCHRIFT

(11) **EP 1 950 456 B1**
(45) Veröffentlichungstag und Bekanntmachung des Hinweises auf die Patenterteilung: **31.10.2012**
(21) Anmeldenummer: 07150116.7
(22) Anmeldetag: 19.12.2007
(51) Int. Cl.: F16H 55/08, F02B 67/06

(54) **Rotationsscheibe mit einer sich periodisch ändernden Zahnlückengeometrie**
Rotation disc with a periodically self-altering tooth-gap geometry
Plaque de rotation dotée d'une géométrie du biseautage de roue dentée changeant périodiquement

(30) Priorität: 23.01.2007 DE 102007003399
(43) Veröffentlichungstag der Anmeldung: 30.07.2008
(73) Patentinhaber: Schaeffler Technologies AG & Co. KG, 91074 Herzogenaurach (DE)
(72) Erfinder: Kern, Roman, 91301, Forchheim (DE); Rettig, Frank, 91074, Herzogenaurach (DE)

(56) Entgegenhaltungen:
- DE-A1-102005 008 677
- DE-U1-202006 010 311

## Beschreibung

### Gebiet der Erfindung

Die vorliegende Erfindung betrifft eine Rotationsscheibe, die um einen Drehwinkel um eine Rotationsachse (12) rotierbar ist, mit einer Anzahl von an einem Umfang der Rotationsscheibe (10) angeordneten Zähnen (20) und zwischen den Zähnen befindlichen Zahnlücken (22), durch deren Mitte eine Zahnlückenmittellinie (30) verläuft, wobei die Rotationsscheibe (10) eine sich periodisch ändernde Zahnlückengeometrie aufweist, wobei ein Kopfkreisradius (24) der Rotationsscheibe (10) konstant ist und wobei die sich periodisch ändernde Zahnlückengeometrie gebildet ist, indem ein Zahnprofil der Anzahl von Zähnen (20) der Rotationsscheibe (10) abhängig von dem Drehwinkel einem bestimmten mittleren Zahnprofil vor- bzw. nacheilt. Die DE10 2005 008 677A1 zeigt eine solche Rotationsscheibe, wobei das Zahnprofil dem mittleren Zahnprofil nach außen in radialer Richtung vor-bzw. nacheilt. Hintergrund der Erfindung

Antriebssysteme auf der Basis von kraftübertragenden Endloselementen, wie bspw. Riemen oder Ketten, und Zahnrädern sind in industriellen Anwendungen weit verbreitet. Insbesondere in Verbrennungsmotoren werden solche Antriebssysteme bspw. zur Übertragung eines Moments von der Kurbelwelle auf die Nockenwellen verwendet.

Neben der Nockenwelle und der Kurbelwelle können auch weitere Komponenten, wie bspw. Wasser- oder Kraftstoffpumpen durch Riemen oder Ketten angetrieben sein. Als Oberbegriff für Riemen- und Kettentriebe spricht man von so genannten Umschlingungsgetrieben.

Bei derartigen Antriebssystemen bzw. Umschlingungsgetrieben treten so genannte Trumschwingungen auf. Bei solchen Trumschwingungen kann es sich um Transversal-, Longitudinal- oder Torsionsschwingungen des kraftübertragenden Endloselements handeln, die durch zyklische Motorbewegungen erregt werden. Die zyklische Erregung der Trumschwingung erfolgt in der Regel durch ein ungleichförmiges Antriebselement des Verbrennungsmotors.

Darüber hinaus tritt bei Zahnriemen aufgrund der Schwingungen eine ungleichmäßige Belastung auf, die Zahnriemenrisse fördert und die Lebensdauer des verwendeten Zahnriemens verringert.

Daher wurden unrunde Zahnräder vorgeschlagen, um diese Trumschwingungen auszugleichen. Unter unrunden Zahnrädern sind dabei solche Zahnräder zu verstehen, die keinen kreisförmigen Umfangsquerschnitt aufweisen und bei denen die Wirkkurve bzw. der Umschlingungsbogen des kraftübertragenden Endloselements nicht kreisförmig ist.

So beschreibt die Offenlegungsschrift DE 10 2004 048 629 A1 eine unrunde Rotationsscheibe eines Steuertriebs. Die Rotationsscheibe weist dabei einen Rotationsscheibenradius auf, der funktional von dem Drehwinkel und einem mittleren Radius abhängt, wobei der mittlere Radius so gewählt ist, dass eine umlaufende Bogenlänge einer Rotationsscheibenumschlingungskurve gleich dem Produkt aus dem vorgegebenen Abstand der Mittelpunkte benachbarter Zähne und der Anzahl der Zähne ist.

Des weiteren beschreibt die Gebrauchsmusterschrift DE 202 20 367 U1 eine Synchronantriebsvorrichtung mit einer Mehrzahl von Rotoren, die mittels eines kraftübertragenden Endloselements miteinander gekoppelt sind, wobei einer der Rotoren ein nicht-kreisförmiges Profil mit mindestens zwei vorstehenden Abschnitten aufweist, die sich mit rückstehenden Abschnitten abwechseln, wobei die Winkelpositionen der vorstehenden und rückstehenden Abschnitte des nicht-kreisförmigen Profils und das Ausmaß der Exzentrizität des nicht-kreisförmigen Profils derart gewählt sind, dass das nicht-kreisförmige Profil ein entgegengesetztes schwankendes korrigierendes Drehmoment an das kraftübertragende Endloselement anlegt, das ein schwankendes Belastungsdrehmoment eines Belastungsaufbaus verringert oder es im wesentlichen aufhebt.

Die Gebrauchsmusterschrift DE 203 19 172 U1 beschreibt eine Rotationskomponente bestehend aus einem Rotor mit mehreren am Umkreis des Rotors angeordneten Zähnen, wobei jeder Zahn eine Krone besitzt und sich zwischen jedem Paar nebeneinander liegender Zähne eine Vertiefung befindet und die Kronen der Zähne auf einem gekrümmten Umfang liegen, der den Umkreis des Rotors bildet, und wobei der Umkreis des Rotors ein nicht kreisförmiges Profil mit mindestens zwei vorstehenden Bereichen aufweist, die sich mit zurückgezogenen Bereichen abwechseln, wobei der Abstand der zwischen den Mittelpunkten der Kronen eines jeden Paares nebeneinander liegender Zähne und dass das Profil der Vertiefung zwischen jedem Paar nebeneinander liegender Zähne im Wesentlichen gleich ist, und dass der Abstand zwischen dem Mittelpunkt jeder Krone und der Achse des Rotors am Umkreis variiert, um das genannte nicht kreisförmige Profil zu erzielen.

Für die Platzbemessung solcher unrunder Rotationsscheiben an ihrem Einbauort ist stets der größte Radius maßgeblich, um ein freies Rotieren der Rotationsscheibe zu ermöglichen. Gerade bei Rotationsscheiben mit einer relativ stark ausgeprägten Unrundheit ist somit ein großer Platzbedarf gegeben.

Da das zur Verfügung stehende Volumen in Motorräumen, insbesondere bei Kraftfahrzeugen, sehr eingeschränkt ist, treten daher bei unrunden Rotationsscheiben des Standes der Technik häufig Probleme bei der Anordnung der Rotationsscheiben auf.

### Aufgabe der Erfindung

Der Erfindung liegt die Aufgabe zugrunde, eine Rotationsscheibe, eine Antriebsvorrichtung oder ein Umschlingungsgetriebe bereitzustellen, bei der bzw. bei dem Trumschwingungen ausgeglichen werden können und ein verbessertes Einlauf- bzw. Auslaufverhalten der Kette bzw. des Zahnriemens bereitgestellt ist, wobei der jeweilige Platzbedarf der Rotationsscheibe minimiert ist.

### Zusammenfassung der Erfindung

Diese Aufgabe wird durch eine Rotationsscheibe gemäß Anspruch 1, einer Antriebsvorrichtung gemäß Anspruch 2 und ein Umschlingungsgetriebe gemäß Anspruch 3 gelöst.

Erfindungsgemäß ist es vorgeschlagen, dass die sich periodisch ändernde Zahnlückengeometrie gebildet ist, indem ein Zahnprofil der Anzahl von Zähnen (20) der Rotationsscheibe (10) abhängig von dem Drehwinkel einem bestimmten mittleren Zahnprofil vor- bzw. nacheilt, und zwar bei Konstantem Teilkreisdurchmesser der Rotationsscheibe.

*Mittels des vor bzw. nacheilenden Zahnprofils ist es möglich, eine Rotationsscheibe bereitzustellen, deren Übersetzungsverhältnis sich periodisch ändert, wobei die Höhe der Zähne jedoch konstant bleibt. Das Zugmittel greift somit stets gleichmäßig in die Rotationsscheibe ein.*

Des weiteren kann vorgesehen sein, dass die Zahnlückenmittellinien jeweils im wesentlichen auf den lokalen Krümmungsmittelpunkt des Teilkreisradius bzw. des Teilkreises der Rotationsscheibe ausgerichtet sind.

Es hat sich gezeigt, dass die Ursache für den hohen Verschleiß der kraftübertragenden Endloselemente bei den Rotationsscheiben des Standes der Technik von großen Kraftspitzen hervorgerufen wird, die von den Zahnradzähnen auf das Endloselement ausgeübt werden. Der Grund hierfür ist die Ausrichtung und Profilierung Zahnräder des Standes der Technik, die im folgenden als kreisrunde Zahnräder bezeichnet werden.

Bei einem kreisrunden Zahnrad sind die zwischen den Zähnen befindlichen Zahnlücken jeweils zu ihrer entsprechenden Zahnlückenmittellinie symmetrisch. Bei kreisrunden Zahnrädern verläuft jede Zahnlückenmittellinie durch die Rotationsachse bzw. den Mittelpunkt des kreisrunden Zahnrads. Der Abschnitt des Zahnrads zwischen zwei solchen Zahnlückenmittellinien wird im Rahmen dieser Beschreibung Sektor genannt.

Bei einem kreisrunden Zahnrad sind alle Sektoren identisch. Durch Aneinandersetzen der Sektoren erhält man ein kreisrundes Zahnrad. Dabei weisen die Zahnlücken eine kontinuierliche Oberfläche ohne mit tangentialen Übergängen versehenen Unstetigkeiten zwischen den Sektoren auf.

Bei den nicht-kreisförmigen oder unrunden Zahnrädern mit einem funktional abhängigen Teilkreisradius wurde bisher bei der Auslegung ebenfalls festgesetzt, dass sämtliche Zahnlückenmittellinien durch die Rotationsachse des Zahnrades verlaufen müssen. Bei derartigen Zahnrädern können jedoch nicht einfach identische Sektoren aneinandergesetzt werden. Vielmehr müssen die Sektoren um ein gewisses Maß verzerrt werden, um die einzelnen Sektoren entlang des nicht-kreisförmigen Umfangs aneinanderzusetzen.

Die Zahnlückenkonturen werden dann jedoch so verzerrt, dass sie im Zahngrund des kraftübertragenden Endloselements eine erhöhte Belastung erzeugen. Darüber hinaus tritt an derartigen Konturen ein erhöhter Verschleiß auf.

Daher können die Zahnlückenmittellinien einer Rotationsscheibe der vorliegenden Erfindung nicht alle auf die Rotationsachse ausgerichtet sein, sondern sind jeweils im wesentlichen auf den lokalen Krümmungsmittelpunkt des Teilkreises der Rotationsscheibe gerichtet, d.h. sie stehen senkrecht auf der Kontur des Teilkreises. Die Zahnlückenmittellinien verlaufen dann in der Regel nicht mehr durch die Rotationsachse. Die Flankenkontur eines Zahns ergibt sich aus der Form benachbarter Zahnlücken. Die Kopfkontur des Zahns ergibt sich aus dem konstanten Kopfkreis.

Durch diese Ausrichtung der Zahnlückenmittellinien auf die jeweiligen lokalen Krümmungsmittelpunkte werden Zahnlückengeometrien mit kontinuierlichen Übergängen zwischen den Sektoren in den Zahnlücken erzeugt. Des weiteren wird so das Problem des erhöhten Verschleißes vermieden. Der Ein- und Auslauf des kraftübertragenden Endloselements erfolgt reibungs- und verschleißreduziert, da die Pressung aufgrund der Kraftübertragung von den Zähnen auf das kraftübertragende Endloselement nun gleichmäßig verteilt ist und Kraftspitzen vermieden werden.

Eine erfindungsgemäße Antriebsvorrichtung umfasst mindestens zwei Rotationsscheiben und ein kraftübertragendes Endloselement zum Übertragen eines Moments zwischen den Rotationsscheiben und ist dadurch gekennzeichnet, dass mindestens eine der Rotationsscheiben eine erfindungsgemäße Rotationsscheibe ist. Auf diese Weise wird auch bei der erfindungsgemäßen Antriebsvorrichtung ein erhöhter Verschleiß des kraftübertragenden Endloselements vermieden.

Des weiteren kann die erfindungsgemäße Antriebsvorrichtung zum Einsatz in einem Kraftfahrzeug ausgebildet sein.

Alternativ kann die erfindungsgemäße Antriebsvorrichtung zum Einsatz in einem Luftfahrzeug ausgebildet sein.

In einer Ausführungsform ist die erfindungsgemäße Antriebsvorrichtung eine Synchronantriebsvorrichtung.

Das erfindungsgemäße Umschlingungsgetriebe umfasst mindestens zwei Rotationsscheiben und ein kraftübertragendes Endloselement zum Übertragen eines Moments zwischen den Rotationsscheiben und ist dadurch gekennzeichnet, dass mindestens eine der Rotationsscheiben eine erfindungsgemäße Rotationsscheibe ist. Auf diese Weise wird auch bei dem erfindungsgemäßen Umschlingungsgetriebe ein erhöhter Verschleiß des kraftübertragenden Endloselements vermieden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung wird nachfolgend anhand eines Ausführungsbeispiels näher erläutert. In der dazugehörigen Zeichnung zeigt dabei:
- Figur 1: zeigt eine nicht erfindungsgemäße Rotationsscheibe mit einem nicht konstanten Teilkreisradius.
- Figur 2: zeigt eine erfindungsgemäße Rotationsscheibe mit einem konstanten Teilkreisradius.

### Ausführliche Beschreibung der Zeichnungen

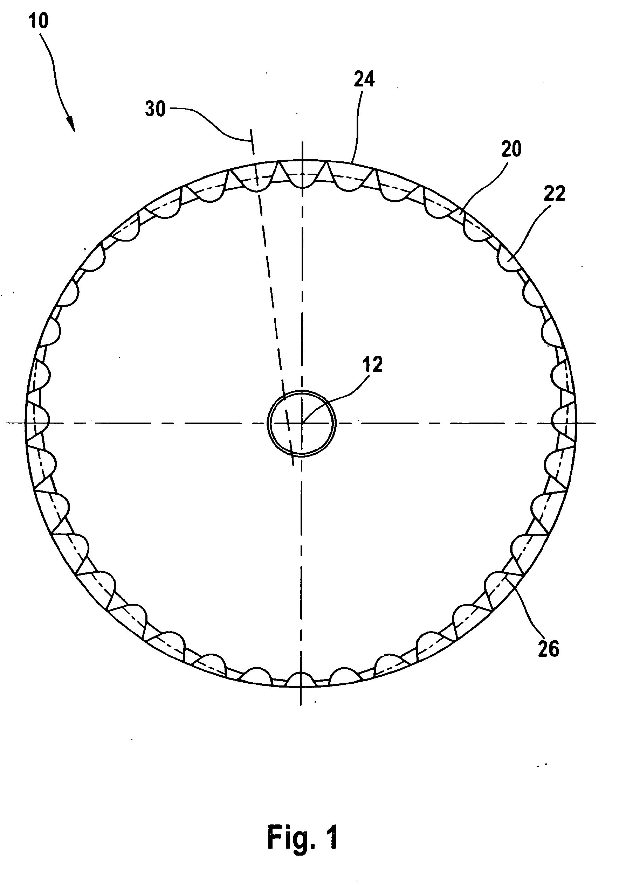

Figur 1 zeigt eine Rotationsscheibe 10.

Die Rotationsscheibe 10 ist um einen Drehwinkel um eine Rotationsachse 12 rotierbar und weist eine Anzahl von an einem Umfang der Rotationsscheibe 10 angeordneten Zähnen 20 und zwischen den Zähnen 20 befindliche Zahnlücken 22 auf, durch deren Mitte eine Zahnlückenmittellinie 30 verläuft.

Die dargestellte Rotationsscheibe 10 weist eine sich periodisch ändernde Zahnlückengeometrie derart auf, dass der Teilkreisradius 26 der Rotationsscheibe funktional von dem Drehwinkel und einem bestimmten mittleren Radius abhängt. In dem dargestellten Beispiel weist der Teilkreisradius 26 jeweils drei Maxima bzw. Minima auf.

Der Kopfkreisradius 24 der Rotationsscheibe 10 ist konstant.

Daraus resultiert eine ebenfalls von dem Drehwinkel abhängige Höhe der Zähne 20. Entsprechend ist die Höhe der Zähne 20 immer dann minimal, wenn der Teilkreisradius 26 maximal ist und dem Kopfkreisradius 24 entspricht. Entsprechend ergibt sich eine maximale Zahnhöhe bei einem minimalen Teilkreisradius.

Abhängig von der Höhe der Zähne 20 greift ein mögliches Zugmittel, bspw. eine Rollen- oder Hülsenkette oder ein Zahnriemen unterschiedlich stark in die Rotationsscheibe 10 ein.

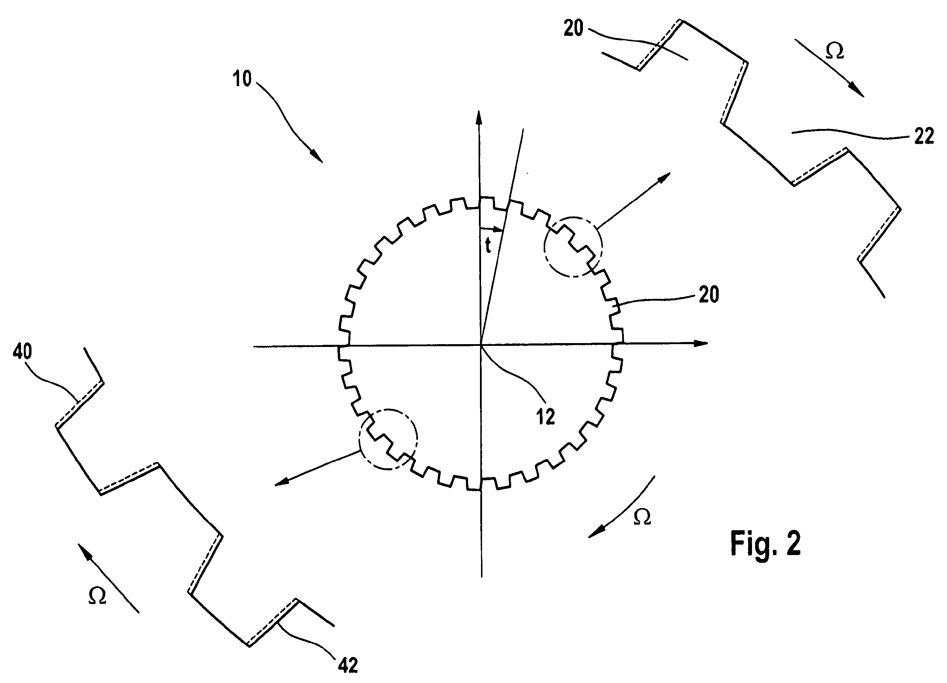

Figur 2 zeigt eine erfindungsgemäße Rotationsscheibe 10 in einer Ausführungsform mit einem konstanten Teilkreisradius.

In zwei vergrößerten Ansichten ist ein Profil ohne periodische Änderungen bzw. Referenzprofil 40 in gestrichelten Linien und ein tatsächliches, sich periodisch änderndes Profil 42 in durchgezogenen Linien dargestellt.

Wie in Figur 2 zu erkennen ist, weist die Rotationsscheibe 10 einen konstanten Kopfkreisradius sowie auch einen konstanten Teilkreisradius 26 auf. Ein sich periodisch änderndes Übersetzungsverhältnis der Rotationsscheibe 10 wird dadurch bereitgestellt, dass das tatsächliche Profil 42 um das Referenzprofil 40 oszilliert, d. h. dem Referenzprofil 40 abhängig von einem Drehwinkel t vor-bzw. nacheilt.

Aus der Drehrichtung Ω ergibt sich daher, dass das tatsächliche Profil 42 dem Referenzprofil 40 in der oberen rechten vergrößerten Ansicht vorauseilt und dem Referenzprofil 40 in der unteren linken vergrößerten Ansicht nacheilt.

Durch die voranstehend beschriebenen erfindungsgemäßen Rotationsscheiben ist es möglich, eine Rotationsscheibe bereitzustellen, bei der Trumschwingungen ausgeglichen werden können und die ein verbessertes Einlauf- bzw. Auslaufverhalten eines Zugmittels bereitstellt, wobei der Platzbedarf der Rotationsscheibe 10 minimiert ist.

Die erfindungsgemäße Rotationsscheibe 10 wird vorzugsweise in einem Umschlingungsgetriebe eingesetzt. Das Umschlingungsgetriebe ist vorzugsweise zum Einsatz in einem Kraftfahrzeug oder in einem Luftfahrzeug ausgebildet. Die erfindungsgemäße Rotationsscheibe 10 ist jedoch auch unabhängig von diesen Anwendungen einsetzbar, bspw. auch in Textil- oder Büromaschinen.

### Bezugszeichenliste

- 10: Rotationsscheibe
- 12: Rotationsachse
- 20: Zähne
- 22: Zahnlücken
- 24: Kopfkreisradius
- 26: Teilkreisradius
- 30: Zahnlücken-Mittellinien
- 40: Referenzprofil
- 42: tatsächliches Profil

- Ω: Drehrichtung

- t: Drehwinkel

## Patentansprüche

1. Rotationsscheibe, die um einen Drehwinkel um eine Rotationsachse (12) rotierbar ist, mit einer Anzahl von an einem Umfang der Rotationsscheibe (10) angeordneten Zähnen (20) und zwischen den Zähnen befindlichen Zahnlücken (22), durch deren Mitte eine Zahnlückenmittellinie (30) verläuft, wobei die Rotationsscheibe (10) eine sich periodisch ändernde Zahnlückengeometrie aufweist, wobei ein Kopfkreisradius (24) der Rotationsscheibe (10) konstant ist und wobei die sich periodisch ändernde Zahnlückengeometrie gebildet ist, indem ein Zahnprofil der Anzahl von Zähnen (20) der Rotationsscheibe (10) abhängig von dem Drehwinkel einem bestimmten mittleren Zahnprofil vor- bzw. nacheilt, **dadurch gekennzeichnet, dass** die Rotationsscheibe (10) einen konstanten Teilkreisradius (26) aufweist.

2. Antriebsvorrichtung mit mindestens zwei Rotationsscheiben (10) und einem kraftübertragenen Endloselement zum Übertragen einer Kraft zwischen den Rotationsscheiben (10), **dadurch gekennzeichnet, dass** mindestens eine der Rotationsscheiben (10) eine Rotationsscheibe (10) nach Anspruch 1 ist.

3. Umschlingungsgetriebe mit mindestens zwei Rotationsscheiben (10) und einem kraftübertragenen Endloselement zum Übertragen einer Kraft zwischen den Rotationsscheiben (10), **dadurch gekennzeichnet, dass** mindestens eine der Rotationsscheiben (10) eine Rotationsscheibe (10) nach Anspruch 1 ist.

## Claims

1. Rotary disc which is rotatable about an axis of rotation (12) by a rotational angle, with a number of teeth (20) arranged on a circumference of the rotary disc (10) and tooth gaps (22) which are located between the teeth and through the centre of which a tooth gap centre line (30) extends, the rotary disc (10) having a periodically changing tooth gap geometry, a tip circle radius (24) of the rotary disc (10) being constant, and the periodically changing tooth gap geometry being formed in that a tooth profile of the number of teeth (20) of the rotary disc (10) precedes or follows a specific mean tooth profile as a function of the rotational angle, **characterized in that** the rotary disc (10) has a constant pitch circle radius (26).

2. Drive apparatus comprising at least two rotary discs (10) and a force-transmitting endless element for transmitting a force between the rotary discs (10), **characterized in that** at least one of the rotary discs (10) is a rotary disc (10) according to Claim 1.

3. Wrap-around transmission comprising at least two rotary discs (10) and a force-transmitting endless element for transmitting a force between the rotary discs (10), **characterized in that** at least one of the rotary discs (10) is a rotary disc (10) according to Claim 1.

## Revendications

1. Plaque de rotation, pouvant tourner d'un angle de rotation autour d'un axe de rotation (12), avec un certain nombre de dents (20) disposées sur une périphérie de la plaque de rotation (10) et avec des entredents (22) situés entre les dents, au centre desquels passe un axe médian d'entredent (30), la plaque de rotation (10) présentant une géométrie d'entredent variant périodiquement, un rayon du cercle de tête (24) de la plaque de rotation (10) étant constant et la géométrie d'entredent variant périodiquement étant formée par le fait qu'un profil de dent de la pluralité de dents (20) de la plaque de rotation (10) est en avant ou en arrière, en fonction de l'angle de rotation, d'un profil de dent moyen déterminé, **caractérisée en ce que** la plaque de rotation (10) présente un rayon de cercle partiel constant (26).

2. Dispositif d'entraînement comprenant au moins deux plaques de rotation (10) et un élément sans fin à transfert de force pour le transfert d'une force entre les plaques de rotation (10), **caractérisé en ce qu'**au moins l'une des plaques de rotation (10) est une plaque de rotation (10) selon la revendication 1.

3. Transmission à courroie comprenant au moins deux plaques de rotation (10) et un élément sans fin à transfert de force pour le transfert d'une force entre les plaques de rotation (10), **caractérisée en ce qu'**au moins l'une des plaques de rotation (10) est une plaque de rotation (10) selon la revendication 1.
